# EUROPEAN PATENT SPECIFICATION

(11) **EP 3 534 355 B1**
(45) Date of publication and mention of the grant of the patent: **24.03.2021**
(21) Application number: 17864448.0
(22) Date of filing: 24.10.2017
(51) Int. Cl.: G09B 9/00, G09B 9/12, G09B 9/14, A63F 13/21

(54) **MULTIFUNCTIONAL VR HUMAN-COMPUTER INTERACTION AND EXTERNAL ENVIRONMENT SIMULATOR AND SIMULATION METHOD**
MULTIFUNKTIONELLE VR-MENSCH-COMPUTER-INTERAKTION UND SIMULATOR EINER EXTERNEN UMGEBUNG SOWIE SIMULATIONSVERFAHREN
INTERACTION MULTIFONCTION VR HOMME-ORDINATEUR ET SIMULATEUR D'ENVIRONNEMENT EXTERNE, ET PROCÉDÉ DE SIMULATION

(30) Priority: 26.10.2016 CN 201610946941
(43) Date of publication of application: 04.09.2019
(73) Proprietor: No.2 Space Vision (Beijing) Technology Development, Beijing 100193 (CN)
(72) Inventor: QIN, Wei, Anhui 238001 (CN); HU, Yuxiang, Anhui 241000 (CN)
(74) Representative: AWA Sweden AB
(86) International application number: PCT/CN2017/107430
(87) International publication number: WO 2018/077155

(56) References cited:
- WO-A1-02/13934
- BR-U2-202015 008 770
- CN-A- 105 214 307
- CN-A- 105 955 487
- CN-A- 106 297 473
- CN-U- 203 165 265
- CN-Y- 2 165 899
- DE-A1-102011 102 037
- GB-A- 131 363
- US-A- 3 135 057
- US-A- 4 856 771

## Description

### Field of the disclosure

The disclosure belongs to the field of virtual reality "VR" technology, and particularly relates to a multi-function VR human-computer interaction and external environment simulator and simulation method.

### Background

Virtual reality "VR" technology originated in the 1960s. It refers to the creation of a three-dimensional environment by means of computer systems and sensor technology, creating a new way of human-computer interaction by mobilizing users' various senses: visual, auditory, tactile, smell, etc. to enjoy a more realistic, immersive experience. With the improvement of hardware performance and the significant reduction of cost, in recent years, virtual reality products have been widely developed.

US 4 856 771 discloses one example of a video simulation apparatus. Further, GB 131 363 discloses an apparatus for developing the human sense of position or direction of movement.

In just two or three years, VR has become one of the most popular words in the technology circle. Virtual reality is a technology-intensive industry that can divide the virtual reality technology system into four aspects: perception, modeling, presentation and interaction. 2016 is called the first year of virtual reality "VR". In this year, the virtual reality industry policy is prosperous. In 2016, the public will understand that what is virtual reality will be an important year. The "Opinions of the Ministry of Culture on Promoting the Transformation and Upgrading of the Cultural and Entertainment Industry" issued by the Ministry of Culture is not the first national policy and regulation to promote the VR industry. Throughout 2016, as early as the two sessions, the "13th Five-Year Plan" outlined the VR industry as a six-field area of emerging frontier innovation. Subsequently, in April, the Electronic Technology Standardization Institute of the Ministry of Industry and Information Technology issued the "Virtual Reality Industry Development White Paper 5.0", calling on the state to start virtual reality research as soon as possible, establish a standard system, and regulate the development of the industry. The release of "Virtual Reality Industry Development White Paper 5.0" reflects the state's emphasis on virtual reality technology, and also indicates that the industry's unified standards construction process is accelerating, which will help improve virtual reality technology and promote the rapid development of industry norms.

With its "human-computer interaction" and near-realistic "immersion", virtual reality technology quickly detonated the market and even appeared the "VR/AR+" boom. However, "virtual reality +" is far from imagining.

At present, VR technology has been applied in many fields in China, and it has relatively mature applications in the viewing, real estate virtual environment display, tourism and game entertainment industries. In the current virtual reality field, a virtual environment is created by a computer. The virtual environment is a three-dimensional space formed by computer graphics. However, the participants are "invested" into the virtual environment through various sensing devices. In the implementation, the participants interact directly with the virtual environment, so that the participants visually create a feeling of being immersed in the virtual environment. However, in the virtual environment, the participants are almost isolated from the real environment. On the one hand, they pose certain security risks to the participants; on the other hand, the participants have limited experience.

### Summary

In view of the defects existing in the prior art, the present invention provides a multi-function VR human-computer interaction and external environment simulator and simulation method, which can effectively solve the above problems.

The technical solution adopted by the present invention is the provision of a multifunctional VR human-computer interaction and external environment simulator as prescribed by claim 1.

Preferably, the base is fixed to the horizontal ground by an expansion bolt; an inner ring locking mechanism is further installed between the outer ring and the inner ring; and the inner ring locking mechanism is used to make the inner ring and the outer ring is fixedly formed integrally, and the inner ring is prohibited from rotating relative to the outer ring; the outer ring is further mounted with an outer ring locking mechanism for limiting rotation of the outer ring.

Preferably, the bottom end of each of the hydraulic rods is hinged to the bottom rotating base by a bottom cardan shaft; the top end of each of the hydraulic rods is hinged to the outer ring by a top cardan shaft.

Preferably, the hydraulic rods are arranged in a number of four, including: a left front hydraulic rod, a right front hydraulic rod, a left rear hydraulic rod, and a right rear hydraulic rod.

Preferably, the operation panel is retractable. The extension rod is fixed to the seat; when the operation panel is not required, the extension rod is shortened so that the operation panel abuts against the seat surface of the seat.

According to another aspect, the invention also provides a simulation method as prescribed by claim 5 for applying the above-mentioned multi-function VR human-computer interaction and external environment simulator.

Preferably, in step 3, the controller may control the bottom rotating motor, the hydraulic pump, the outer ring driving motor and/or the inner ring driving motor.

The controller controls the action of the bottom rotating motor, and the bottom rotating motor drives the bottom rotating base to rotate in the X-Y plane, thereby driving the seat to rotate in the X-Y plane;
and/or
the controller controls the hydraulic pump action; wherein the hydraulic pump comprises: a left front hydraulic lever, a right front hydraulic lever, a left rear hydraulic lever and a right rear hydraulic lever; 1) when the controller controls the left front hydraulic lever, the right front hydraulic lever, When the left rear hydraulic rod and the right rear hydraulic rod are simultaneously extended in equal length, the outer ring is driven to rise, which in turn drives the seat to rise along the Z axis; 2) when the controller controls the left front hydraulic rod, the right front hydraulic rod, and the left When the rear hydraulic rod and the right rear hydraulic rod are shortened by the same length, the outer ring is driven to descend, thereby driving the seat to descend along the Z axis; 3) when the controller controls the left front hydraulic rod and the right front hydraulic rod to synchronize the elongation Set the length. At the same time, when the left rear hydraulic rod and the right rear hydraulic rod are controlled to shorten the preset length synchronously, the outer ring of the drive is horizontally moved forward along the Y axis, thereby driving the seat to move horizontally along the Y axis; 4) The controller controls the left front hydraulic rod and the right front hydraulic rod to synchronously shorten the preset length. At the same time, when the left rear hydraulic rod and the right rear hydraulic rod are controlled to synchronously extend the preset length, the outer ring is driven to move horizontally along the Y axis, thereby driving seat Horizontally moving rearward along the Y-axis; 5) when the controller controls the left front hydraulic lever and the left rear hydraulic lever to simultaneously shorten the preset length, and simultaneously controls the right front hydraulic lever and the right rear hydraulic lever to synchronously extend the preset length, The driving outer ring is inclined to the left by a preset angle, thereby driving the seat to be tilted to the left by a predetermined angle; 6) when the controller controls the left front hydraulic rod and the left rear hydraulic rod to simultaneously extend the preset length, and at the same time, controlling the right front hydraulic pressure When the rod and the right rear hydraulic rod are synchronized to shorten the preset length, the driving outer ring is tilted to the right by a predetermined angle, thereby driving the seat to the right to a predetermined angle;
and/or
the controller controls the action of the outer ring drive motor, and the outer ring drive motor drives the outer ring to rotate in the Y-Z plane, thereby driving the seat to rotate in the Y-Z plane;
and/or
the controller controls the inner ring to drive the motor to move, and the inner ring drive motor drives the inner ring to rotate in the X-Z plane, thereby driving the seat to rotate in the X-Z plane.

The multi-function VR human-computer interaction and external environment simulator and simulation method provided by the invention have the following advantages:
The invention provides a multi-function VR human-computer interaction and external environment simulator and simulation method, which can realize the maximum self-control of the participants, and obtain the best self-perception in the real environment through the motion trajectory of the simulator. It has strong practicability and security, and also significantly enhances the real experience of participants.

### Brief description of the figures

FIG. 1 is a front view of a multifunction VR human-computer interaction and external environment simulator provided by the present invention;
FIG. 2 is a top view of a multi-function VR human-computer interaction and external environment simulator provided by the present invention;
FIG. 3 is a side view of a multi-function VR human-computer interaction and external environment simulator provided by the present invention;
FIG. 4 is a schematic diagram of the operation of the multi-function VR human-computer interaction and external environment simulator provided by the first driving function according to the present invention;
FIG. 5 is a schematic diagram of the operation of the multi-function VR human-computer interaction and external environment simulator provided by the second driving action according to the present invention;
FIG. 6 is a schematic diagram of the operation of the multi-function VR human-computer interaction and external environment simulator provided by the third driving action according to the present invention;
FIG. 7 is a schematic diagram of the operation of the multi-function VR human-computer interaction and external environment simulator provided by the fourth driving action according to the present invention;
FIG. 8 is a schematic diagram of the operation of the multi-function VR human-computer interaction and external environment simulator provided by the fifth driving function according to the present invention;
FIG. 9 is a schematic diagram of the operation of the multi-function VR human-computer interaction and external environment simulator provided by the sixth driving function according to the present invention;

Where: 1 - base; 2 - bottom rotating base; 3 - outer ring; 4 - inner ring; 5 - seat; 6 - left front hydraulic bar; 7 - right front hydraulic bar; 8 - left rear hydraulic bar; 9 - right rear hydraulic bar; 10 - universal joint shaft; 11 - operation panel; 12 - extension rod; 13 - bottom rotating motor; 14 - outer ring drive motor.

### Description of exemplifying embodiments

The present invention will be further described in detail below with reference to the accompanying drawings and embodiments. It is understood that the specific embodiments described herein are merely illustrative of the invention and are not intended to limit the invention.

For the VR experiencer in the virtual environment, completely isolated from the real environment, the participants cannot perfectly control their own technical problems. The present invention provides a multi-function VR human-computer interaction and external environment simulator and simulation method, with corresponding virtual environmental resources can realize the maximum control of the participants themselves, and obtain the best self-perception in the real environment through the trajectory of the simulator. It has strong practicability and security, and also significantly improves the participants' real experience.

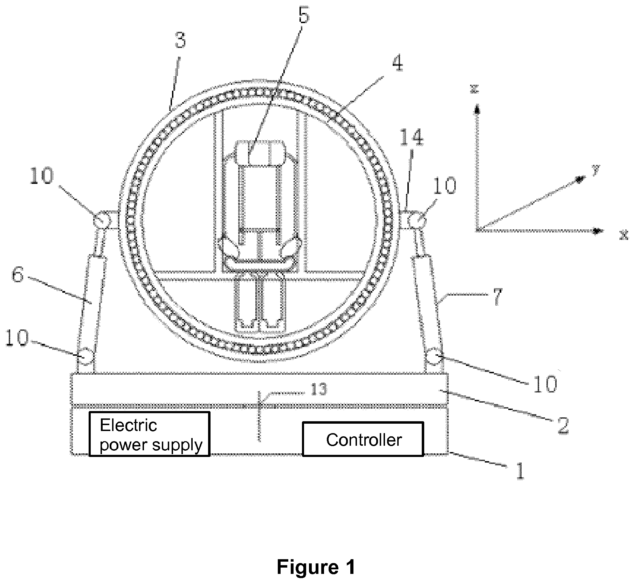

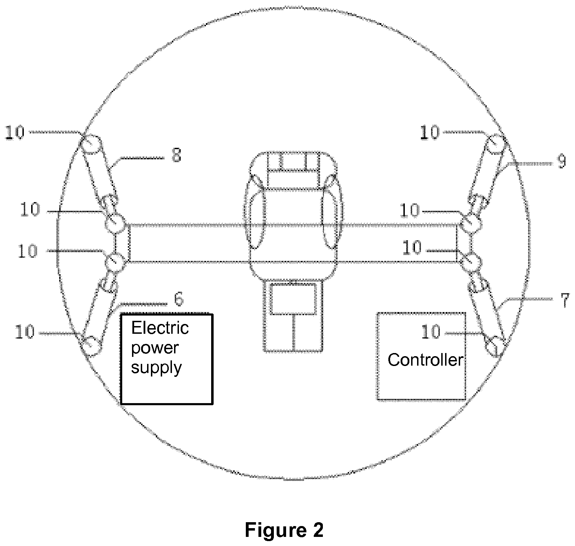

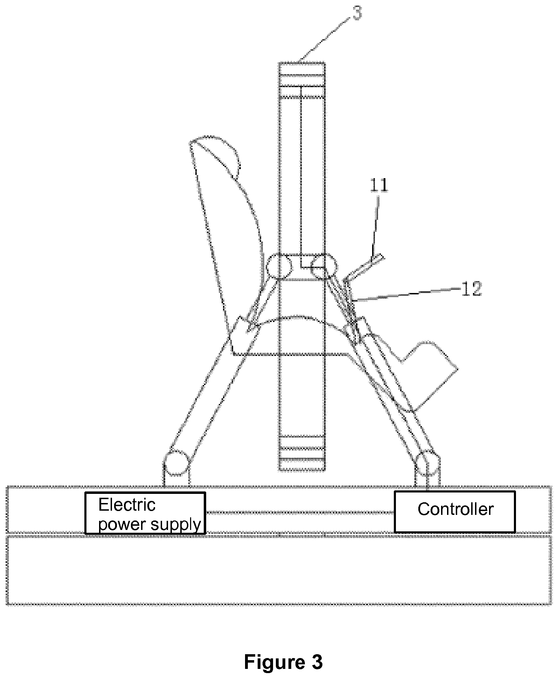

Referring to Figures 1-3, respectively, the main view, top view and side view of the multi-function VR human-computer interaction and external environment simulator, the multi-function VR human-computer interaction and external environment simulator includes: base, bottom rotating base, outer ring, inner ring, seat and controller. The following is a detailed description of each component:

### 1) base

The base is fixed to a level ground; for example, the base is fixed to a level ground by expansion bolts. The base is 2400^{∗}400mm in diameter and has a metal structure. A power supply module and controller are installed inside the base.

### 2) bottom rotating base

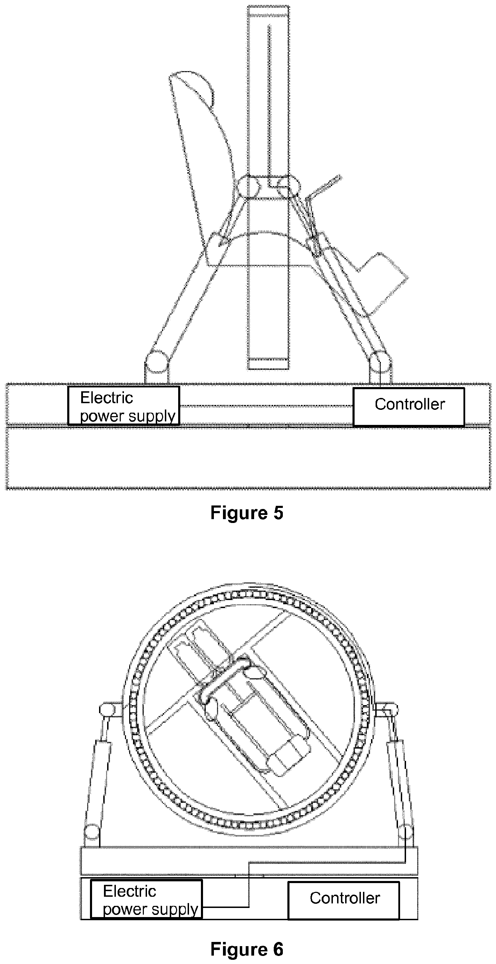

The bottom rotating base is rotatably mounted on the upper surface of the base, the rotating shaft of the bottom rotating base is connected with a bottom rotating motor, the bottom rotating motor is used for driving the bottom rotating base to rotate in the X-Y plane; the bottom rotating base has a diameter of 2400^{∗}200 mm, and the metal structure. As shown in FIG. 5, it is a schematic diagram of driving the bottom rotating base to rotate in the X-Y plane when the bottom rotating motor operates.

### 3) Outer ring

The outer ring is disposed above the bottom rotating base, and n hydraulic rods are distributed between the outer ring and the bottom rotating base, n is a natural number; the bottom end of each hydraulic rod is hinged to the bottom rotating base, and the top of each hydraulic rod I shinged to the outer ring; each hydraulic rod is connected with a hydraulic pump; each hydraulic pump drives each hydraulic rod to perform a telescopic movement, thereby controlling the tilt angle of the outer ring in the X direction and/or the horizontal movement in the Y direction.

In practical applications, the bottom end of each hydraulic rod is hinged to the bottom rotating base through the bottom cardan shaft; the top end of each hydraulic rod is hinged to the outer ring through the top cardan shaft. The diameter of the hydraulic rod is 100mm, the telescopic range is 700mm to 1300mm, and the number of hydraulic rods is preferably four, including: left front hydraulic rod, right front hydraulic rod, left rear hydraulic rod and right rear hydraulic rod. Therefore, the number of bottom cardan shafts is four, located at the four corners of the bottom rotating base, and the direction is upward for connecting the hydraulic rods. The number of top cardan shafts is four, which is used to connect the outer ring and the hydraulic rod and can be tilted by 15°.

The outer ring can be a circular tube having a diameter of 1700 mm, a thickness of 50 mm, and a width of 200 mm.

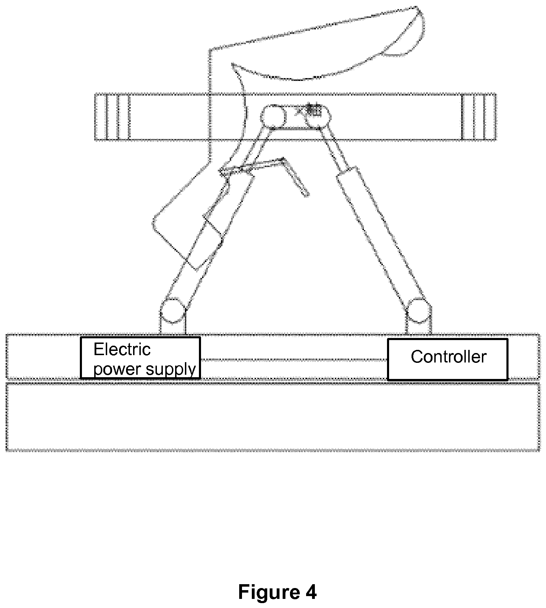

In addition, the outer ring is connected with an outer ring driving motor for driving the outer ring to rotate in the Y-Z plane; as shown in FIG. 4, it is a schematic diagram of driving the outer ring to rotate in the Y-Z plane when the outer ring driving motor operates. The outer ring is also equipped with an outer ring locking mechanism, and the outer ring locking mechanism is used to limit the outer ring rotation.

### 4) Inner ring

The inner ring can be rotatably sleeved inside the outer ring, and the inner ring can adopt a circular tube with a diameter of 1500 mm, a thickness of 50 mm and a width of 200 mm. The inner ring is connected with an inner ring driving motor for driving the inner ring to rotate in the X-Z plane; as shown in FIG. 6, when the inner ring driving motor operates, the seat is rotated in the X-Z plane. An inner ring locking mechanism is also installed between the outer ring and the inner ring; the inner ring locking mechanism is used to fix the inner ring and the outer ring integrally, and the inner ring is prohibited from rotating relative to the outer ring.

### 5) Seat

The seat is fixedly mounted inside the inner ring; the seat is provided with an operation panel and a pedal, and the seat can be extended into an upright mode; the seat is fixed to the inside of the inner ring by a 7-point fixing; the operation panel is extended by a telescopic extension rod It is fixed to the seat; when the operation panel is not needed, the extension rod is shortened so that the operation panel is in close contact with the seat surface of the seat, and the operator is not adversely affected when the operation panel is not required. The operation panel can be implemented by using a tablet with a touch function.

The seat is also equipped with a leg sensor and a hand sensor; the leg sensor includes a sole displacement sensor, a two-legged outer sensor and a two-legged inner sensor for sensing the displacement of the leg in different directions, and the leg sensor can be fed back via a wireless Bluetooth signal. Operation panel. Through the legs, commands such as forward, backward, turn, dodge, squat, jump, and squat can be triggered.

Hand sensor: The seat reserves the hand sensor interface to achieve complex hand movement capture. The control panel is installed to synchronize operations and simulate driving, shooting, and hitting commands through the hand.

Both the leg sensor and the hand sensor are connected to the input of the operation panel; the output of the operation panel is connected to the controller.

### 6) Controller

The controller is respectively connected to the bottom rotating electric machine, the hydraulic pump, the outer ring driving motor and the inner ring driving motor; wherein the X axis and the Y axis form a horizontal plane, and the Z axis is an axis perpendicular to the horizontal plane.

The invention also provides a simulation method for applying the above-mentioned multi-function VR human-computer interaction and external environment simulator, comprising the following steps:
Step 1. The operation panel collects the participant's leg posture information and the hand posture information in real time through the leg sensor and the hand sensor;
Step 2: The operation panel acquires a corresponding virtual manipulation instruction according to the pre-stored leg posture information, the correspondence between the hand posture information and the virtual manipulation instruction, or the operation panel directly receives the virtual manipulation of the virtual environment input by the participant. instruction;
Step 3: The operation panel controls the virtual environment according to the virtual manipulation instruction obtained in step 2; on the other hand, controls the real environment, that is, the bottom rotating motor, the hydraulic pump, the outer ring drive motor, and/or The inner ring drive motor controls to control the attitude of the seat, ultimately achieving control of the participant's own posture.

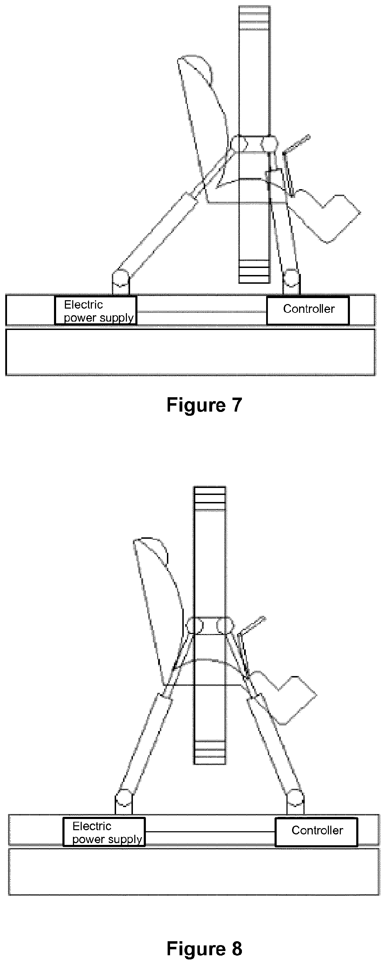

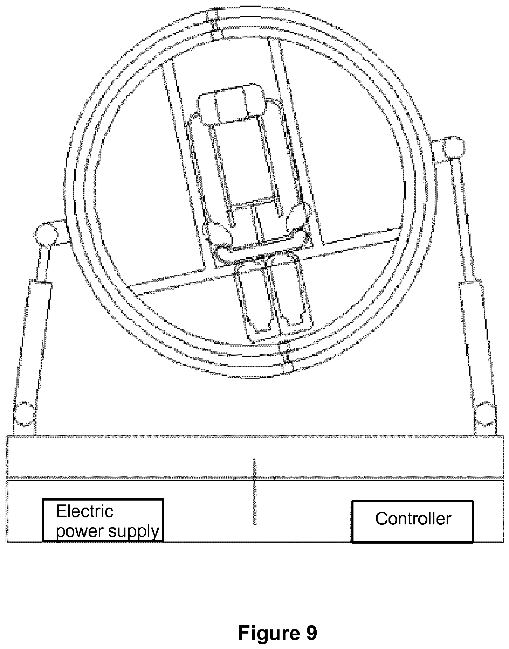

In this step, the controller controls the bottom rotating motor, the hydraulic pump, the outer ring driving motor and/or the inner ring driving motor, and specifically includes:
the controller controls the action of the bottom rotating motor, and the bottom rotating motor drives the bottom rotating base to rotate in the X-Y plane, thereby driving the seat to rotate in the X-Y plane;
   and/or
the controller controls the hydraulic pump action; wherein the hydraulic pump comprises: a left front hydraulic lever, a right front hydraulic lever, a left rear hydraulic lever and a right rear hydraulic lever; 1) when the controller controls the left front hydraulic lever, the right front hydraulic lever, and the left rear hydraulic lever When the right rear hydraulic rod is synchronized with the same length, the outer ring is driven to rise, which in turn drives the seat to rise along the Z axis; 2) when the controller controls the left front hydraulic lever, the right front hydraulic lever, the left rear hydraulic lever, and the right rear When the synchronous length of the hydraulic rod is shortened, the outer ring is driven to perform the lowering action, thereby driving the seat to descend along the Z axis; referring to FIG. 8, a schematic diagram of driving the seat along the Z axis; 3) when the controller controls the left front hydraulic rod Synchronously extending the preset length with the right front hydraulic rod, and simultaneously controlling the left rear hydraulic rod and the right rear hydraulic rod to shorten the preset length, the driving outer ring moves horizontally along the Y-axis front, thereby driving the seat along the Y-axis front. Move horizontally; 4) When the controller controls the left front hydraulic rod and the right front hydraulic rod to shorten the preset length synchronously, and simultaneously controls the left rear hydraulic rod and the right rear hydraulic rod to synchronously extend the preset length, the outer ring is driven to move horizontally along the Y axis, which in turn drives the seat to move horizontally along the Y-axis; referring to FIG. 7, a schematic diagram of driving the seat to move horizontally forward and backward along the Y-axis; 5) when the controller controls the left front hydraulic lever and the left rear hydraulic lever to shorten the preset Length, at the same time, when controlling the right front hydraulic rod and the right rear hydraulic rod to synchronously extend the preset length, the driving outer ring is tilted to the left by a predetermined angle, thereby driving the seat to the left to tilt the preset angle; 6) when the controller controls the left front The hydraulic rod and the left rear hydraulic rod are synchronously extended by a preset length. At the same time, when the right front hydraulic rod and the right rear hydraulic rod are controlled to shorten the preset length, the outer ring is driven to the right by a predetermined angle, thereby driving the seat to the right. Set the angle; refer to FIG. 9, which is a schematic diagram of driving the seat to tilt left and right;
   and/or
the controller controls the action of the outer ring drive motor, and the outer ring drive motor drives the outer ring to rotate in the YZ plane, thereby driving the seat to rotate in the YZ plane; as shown in FIG. 4, when the outer ring drive motor operates, it drives the outer ring Schematic diagram of the rotation of the ring in the YZ plane.
   and/or
the controller controls the inner ring to drive the motor to move, and the inner ring drive motor drives the inner ring to rotate in the X-Z plane, thereby driving the seat to rotate in the X-Z plane. As shown in FIG. 6, when the inner ring drive motor operates, the seat is rotated in the X-Z plane.

It should be emphasized that, for the multi-function VR human-computer interaction and external environment simulator provided by the present invention, the controller can be any of the bottom rotating electric machine, the hydraulic pump, the outer ring driving motor and the inner ring driving motor at the same time. One, any two, any three or any four simultaneous control, thus achieving different combinations of displacement and rotation, simulating various application scenarios, such as playground, flight, car driving, shooting, fighting, surfing, bungee jumping and so on.

The multi-function VR human-computer interaction and external environment simulator and simulation method provided by the invention can be applied to various virtual reality technology scenarios, and several specific application scenarios are listed below:

### 1) Large playground

Since the invention can realize multi-directional 360-degree rotation and multi-directional movement, when designing a virtual game, various playground equipment and simulation scenes can be freely designed, and the SDK interface (software development tool package) is developed through software. Kit) achieves simultaneous multi-directional rotation and movement, giving participants the most realistic simulation results.

### 2) Racing games (driver simulation driving training)

In conjunction with the dedicated driving simulation device, combined with the motion trajectory of the present invention, various racing virtual environments are designed. For example, when the player is in the game scene, the steering wheel is used to simulate the steering wheel, and the foot contact is used to simulate the pedaling, braking, and the like. , transmitted to the operation panel, the operation panel on the one hand controls the player in the virtual scene. On the other hand, through the SDK interface, the simulator simulates the effects of forward tilting, sideways, bumps, etc., to bring real experience to the player. Moreover, the present invention supports distributed virtual reality technology to realize networked multiplayer racing competition.

### 3) Flying games (pilot simulation driving training, astronaut simulation training)

With the special driving simulation device, according to the multi-directional flight, multi-angle sideways and rotation characteristics, various flight driving and air combat scenarios are designed through virtual reality technology, and the synchronization effect can be realized through the SDK interface, and the participants can be made. Free driving and achieving group combat effectiveness. Note that due to the high design difficulty of free-driving air combat games, such SDK interface logic will be designed by professional aircraft experts. Further, according to the outer ring device of the present invention, the player's limb simulation is horizontal, and the limbs such as the left and right sideways and the steering are simultaneously synchronized to simulate a gliding game.

### 4) Shooting and fighting games

Through the foot motion sensor, the player can carry forward, retreat, turn, squat, squat and even roll in the game, and cooperate with the simulation electron gun and motion capture system to realize the player's free steering and shooting action. The player's physical form allows the player to operate the game perfectly without extensive displacement and large volume movements.

In the design of the fighting game, the player analyzes the body trajectory analysis and the limb shape analysis system in advance, and sets some fighting actions for the player. Through the triggering command, the player's movements in the game are controlled, and the external simulator is used to complete the reality. The limb shape, and through the function of the front and rear, side direction movement and inversion of the present invention, simulates the force and the reaction force to achieve a real fighting effect.

### 5) surfing

After the player enters the game, the device simulator automatically rotates 180 degrees to simulate the player's sideways forward shape, and the rest of the control is the same as above.

Virtual reality technology has just entered the stage of rapid development. With the continuous advancement of technology, the application scenarios in various real-world environments will gradually be realized in the virtual environment. We will gradually improve through continuous technological innovation, improvement and upgrade. The invention will also continuously develop a more convenient and realistic human-machine interactive simulation system.

The above description is only a preferred embodiment of the present invention, and it should be noted that those skilled in the art can also make several improvements and variations without departing from the principles of the present invention. The scope of protection of the invention should be considered.

## Claims

1. A multi-functional VR human-computer interaction and external environment simulator, comprising: a base (1), a bottom rotating base (2), an outer ring (3), an inner ring (4), a seat (5), and a controller, wherein
- the base (1) is fixed on a horizontal floor;
- the bottom rotating base (2) is rotatably mounted on the base (1), a rotating shaft of the bottom rotating base (2) being connected to a bottom rotating motor (14), and the bottom rotating motor (14) is used for driving the bottom rotating base (2) to rotate in an X-Y plane;
- the outer ring (3) is disposed above the bottom rotating base (2) and n hydraulic rods are distributed between the outer ring (3) and the bottom rotating base (2), n being a natural number, a bottom end of each of the hydraulic rods being hinged to the bottom rotating base (2) and a top end of each of the hydraulic rods being hinged to the outer ring (3), each of the hydraulic rods being connected with a hydraulic pump, each of the hydraulic rods being driven to perform a telescopic movement by each of the hydraulic pumps for controlling a tilt angle of the outer ring in an X direction and/or a horizontal movement in a Y direction, and the outer ring (3) is connected with an outer ring drive motor (14) for driving the outer ring (3) to rotate in an Y-Z plane;
- the inner ring (4) is rotatably sleeved inside the outer ring (3), and the inner ring (4) is connected to an inner ring driving motor for driving the inner ring (4) to rotate in an X-Z plane;
- the seat (5) is fixedly mounted inside the inner ring (4); and
- the controller is respectively connected to the bottom rotating motor (14), the hydraulic pumps, an outer ring driving motor and the inner ring driving motor;
wherein an X axis and a Y axis form a horizontal plane, and a Z axis is an axis perpendicular to a horizontal plane, **characterized in that**
the seat (5) is provided with an operation panel (11) and a pedal, and the seat (5) can be extended into an upright mode, the seat (5) is fixed to the inside of the inner ring (4) with a 7-point fixing manner;
wherein the seat (5) is further equipped with a leg sensor and a hand sensor, and the leg sensor and the hand sensor are each connected to an input of the operation panel (11), an output of the operation panel (11) being connected to the controller; and
wherein the leg sensor comprises a sole displacement sensor, a two-legged outer sensor, and a two-legged inner sensor.

2. The multi-function VR human-computer interaction and external environment simulator according to claim 1, wherein:
- the base (1) is fixed to the horizontal floor by an expansion bolt;
- an inner ring locking mechanism is installed between the outer ring (3) and the inner ring (4), the inner ring locking mechanism being configured to fix the inner ring (4) and the outer ring (3) integrally to each other and to prohibit the inner ring (4) from rotating relative to the outer ring (3); and
- there is an outer ring locking mechanism for limiting the rotation of the outer ring (3).

3. The multi-function VR human-computer interaction and external environment simulator according to claim 1, wherein the bottom end of each of the hydraulic rods is hinged to the bottom rotating base (2) through a bottom cardan shaft and the top end of the hydraulic rod is hinged to the outer ring (3) by a top cardan shaft.

4. The multi-function VR human-computer interaction and external environment simulator according to claim 1, wherein the number of the hydraulic rods is four, including: a left front hydraulic rod (6), a right front hydraulic rod (7), and a left rear hydraulic rod (8), and a right rear hydraulic rod (9).

5. A simulation method for a multi-function VR human-computer interaction and external environment simulator according to any one of claims 1 to 4, **characterized in that** it comprises the following steps:
Step 1: the operation panel collects a participant's leg posture information and hand posture information in real time through the leg sensor and the hand sensor;
Step 2: the operation panel acquires a virtual manipulation instruction according to the leg posture information and hand posture information, or the operation panel directly receives the virtual manipulation instruction by participant instruction; and
Step 3: the controller controls the virtual environment according to the virtual manipulation instruction obtained in step 2 by controlling a real environment being a bottom rotating motor (14), the hydraulic pumps, the outer ring driving motor, and/or the inner ring drive motor to control an attitude of the seat (5) for achieving control of the participant's own posture.

## Patentansprüche

1. Multifunktionaler VR-Simulator für Mensch-Computer-Interaktion und äußere Umgebung, umfassend: eine Basis (1), eine Bodendrehbasis (2), einen Außenring (3), einen Innenring (4), einen Sitz (5) und eine Steuerung, wobei
- die Basis (1) auf einem horizontalen Untergrund befestigt ist;
- die Bodendrehbasis (2) drehbar auf der Basis (1) montiert ist, wobei eine Drehwelle der Bodendrehbasis (2) mit einem Bodendrehmotor (14) verbunden ist und der Bodendrehmotor (14) dazu verwendet wird, die Bodendrehbasis (2) zum Drehen in einer X-Y-Ebene anzutreiben;
- der Außenring (3) oberhalb der Bodendrehbasis (2) eingerichtet ist und n Hydraulikstangen zwischen dem Außenring (3) und der Bodendrehbasis (2) verteilt sind, wobei n eine natürliche Zahl ist, ein unteres Ende jeder der Hydraulikstangen an der Bodendrehbasis (2) angelenkt ist und ein oberes Ende jeder der Hydraulikstangen am Außenring (3) angelenkt ist, jede der Hydraulikstangen mit einer Hydraulikpumpe verbunden ist, jede der Hydraulikstangen durch eine jeweilige der Hydraulikpumpen zum Durchführen einer teleskopischen Bewegung zu dem Zweck angetrieben wird, einen Neigungswinkel des Außenrings in einer X-Richtung und/oder eine horizontale Bewegung in einer Y-Richtung zu steuern, und der Außenring (3) mit einem Außenringantriebsmotor (14) zum Antreiben des Außenrings (3) zum Drehen in einer Y-Z-Ebene verbunden ist;
- der Innenring (4) drehbar innerhalb des Außenrings (3) aufgenommen ist und der Innenring (4) mit einem Innenringantriebsmotor zum Antreiben des Innenrings (4) zum Drehen in einer X-Z-Ebene verbunden ist;
- der Sitz (5) fest im Inneren des Innenrings (4) montiert ist; und
- die Steuerung jeweils mit dem Bodendrehmotor (14), den Hydraulikpumpen, einem Außenringantriebsmotor und dem Innenringantriebsmotor verbunden ist;
wobei eine X-Achse und eine Y-Achse eine horizontale Ebene bilden und eine Z-Achse eine Achse senkrecht zu einer horizontalen Ebene ist, **dadurch gekennzeichnet, dass**
der Sitz (5) mit einem Bedienfeld (11) und einem Pedal bereitgestellt ist und der Sitz (5) in einen aufrechten Modus ausgefahren werden kann, der Sitz (5) an der Innenseite des Innenrings (4) mit einer 7-Punkt-Befestigungsweise befestigt ist;
wobei der Sitz (5) ferner mit einem Beinsensor und einem Handsensor ausgestattet ist und der Beinsensor und der Handsensor jeweils mit einem Eingang des Bedienfelds (11) verbunden sind, wobei ein Ausgang des Bedienfelds (11) mit der Steuerung verbunden ist; und
wobei der Beinsensor einen Sohlenverschiebungssensor, einen Zweibein-Außensensor und einen Zweibein-Innensensor umfasst.

2. Multifunktionaler VR-Simulator für Mensch-Computer-Interaktion und äußere Umgebung nach Anspruch 1, wobei:
- die Basis (1) auf dem horizontalen Untergrund mit einem Spreizhülsenanker befestigt ist;
- ein Innenringverriegelungsmechanismus zwischen dem Außenring (3) und dem Innenring (4) installiert ist, wobei der Innenringverriegelungsmechanismus dafür ausgelegt ist, den Innenring (4) und den Außenring (3) integral aneinander zu fixieren und zu verhindern, dass sich der Innenring (4) relativ zum Außenring (3) dreht; und
- ein Außenringverriegelungsmechanismus zum Begrenzen der Drehung des Außenrings (3) vorhanden ist.

3. Multifunktionaler VR-Simulator für Mensch-Computer-Interaktion und äußere Umgebung nach Anspruch 1, wobei das untere Ende jeder der Hydraulikstangen über eine Bodenkardanwelle an der Bodendrehbasis (2) angelenkt ist und das obere Ende der Hydraulikstange über eine obere Kardanwelle am Außenring (3) angelenkt ist.

4. Multifunktionaler VR-Simulator für Mensch-Computer-Interaktion und äußere Umgebung nach Anspruch 1, wobei die Anzahl der Hydraulikstangen vier beträgt, einschließlich: einer linken vorderen Hydraulikstange (6), einer rechten vorderen Hydraulikstange (7), und einer linken hinteren Hydraulikstange (8) und einer rechten hinteren Hydraulikstange (9).

5. Simulationsverfahren für einen multifunktionalen VR-Simulator für Mensch-Computer-Interaktion und äußere Umgebung nach einem der Ansprüche 1 bis 4, **dadurch gekennzeichnet, dass** es die folgenden Schritte umfasst:
Schritt 1: Das Bedienfeld sammelt Bein-Haltungsinformationen und Hand-Haltungsinformationen eines Teilnehmers in Echtzeit über den Beinsensor und den Handsensor;
Schritt 2: Das Bedienfeld erfasst eine virtuelle Manipulationsanweisung entsprechend der Bein-Haltungsinformationen und der Hand-Haltungsinformationen, oder das Bedienfeld empfängt die virtuelle Manipulationsanweisung direkt durch Anweisung des Teilnehmers; und
Schritt 3: Die Steuerung steuert die virtuelle Umgebung entsprechend der in Schritt 2 erhaltenen virtuellen Manipulationsanweisung durch Steuern einer realen Umgebung aus einem Bodendrehmotor (14), den Hydraulikpumpen, dem Außenringantriebsmotor und/oder dem Innenringantriebsmotor zu dem Zweck, eine Lage des Sitzes (5) zum Erreichen von Kontrolle über die eigene Körperhaltung des Teilnehmers zu steuern.

## Revendications

1. Simulateur multifonction d'interaction homme-ordinateur en VR et d'environnement externe, comportant :
une base (1), une base rotative inférieure (2), une bague extérieure (3), une bague intérieure (4), un siège (5),
et un moyen de commande,
- la base (1) étant fixée sur un sol horizontal ;
- la base rotative inférieure (2) étant montée de façon tournante sur la base (1), un arbre de rotation de la base rotative inférieure (2) étant relié à un moteur inférieur (14) de rotation, et le moteur inférieur (14) de rotation étant utilisé pour entraîner la base rotative inférieure (2) en rotation dans un plan X-Y ;
- la bague extérieure (3) étant disposée au-dessus de la base rotative inférieure (2) et n vérins hydrauliques étant répartis entre la bague extérieure (3) et la base rotative inférieure (2), n étant un entier naturel, une extrémité inférieure de chacun des vérins hydrauliques étant articulée à la base rotative inférieure (2) et une extrémité supérieure de chacun des vérins hydrauliques étant articulée à la bague extérieure (3), chacun des vérins hydrauliques étant relié à une pompe hydraulique, chacun des vérins hydrauliques étant actionné pour effectuer un mouvement télescopique par chacune des pompes hydrauliques afin de commander un angle d'inclinaison de la bague extérieure dans une direction X et/ou un mouvement horizontal dans une direction Y, et la bague extérieure (3) étant reliée à un moteur (14) d'entraînement de bague extérieure servant à entraîner la bague extérieure (3) en rotation dans un plan Y-Z ;
- la bague intérieure (4) étant emboîtée de façon tournante à l'intérieur de la bague extérieure (3), et la bague intérieure (4) étant reliée à un moteur d'entraînement de bague intérieure servant à entraîner la bague intérieure (4) en rotation dans un plan X-Z ;
- le siège (5) étant monté de façon fixe à l'intérieur de la bague intérieure (4) ; et
- le moyen de commande étant relié respectivement au moteur inférieur (14) de rotation, aux pompes hydrauliques, à un moteur d'entraînement de bague extérieure et au moteur d'entraînement de bague intérieure ;
un axe X et un axe Y formant un plan horizontal, et un axe Z étant un axe perpendiculaire à un plan horizontal,
**caractérisé en ce que**
le siège (5) est muni d'un tableau (11) de manœuvre et d'une pédale, et le siège (5) pouvant être déployé pour adopter un mode redressé, le siège (5) étant fixé à l'intérieur de la bague intérieure (4) par une méthode de fixation à 7 points ;
le siège (5) est en outre équipé d'un capteur de jambe et d'un capteur de main, et le capteur de jambe et le capteur de main étant chacun relié à une entrée du tableau (11) de manœuvre, une sortie du tableau (11) de manœuvre étant reliée au moyen de commande ; et
le capteur de jambe comporte un capteur de déplacement de semelle, un capteur extérieur à deux jambes, et un capteur intérieur à deux jambes.

2. Simulateur multifonction d'interaction homme-ordinateur en VR et d'environnement externe selon la revendication 1, où :
- la base (1) est fixée au sol horizontal par un boulon expansible ;
- un mécanisme de verrouillage de bague intérieure est installé entre la bague extérieure (3) et la bague intérieure (4), le mécanisme de verrouillage de bague intérieure étant configuré pour fixer la bague intérieure (4) et la bague extérieure (3) l'une à l'autre d'un seul tenant et pour empêcher la bague intérieure (4) de tourner par rapport à la bague extérieure (3) ; et
- il existe un mécanisme de verrouillage de bague extérieure servant à limiter la rotation de la bague extérieure (3).

3. Simulateur multifonction d'interaction homme-ordinateur en VR et d'environnement externe selon la revendication 1, l'extrémité inférieure de chacun des vérins hydrauliques étant articulée à la base rotative inférieure (2) par l'intermédiaire d'un arbre à cardan inférieur et l'extrémité supérieure du vérin hydraulique étant articulée à la bague extérieure (3) par un arbre à cardan supérieur.

4. Simulateur multifonction d'interaction homme-ordinateur en VR et d'environnement externe selon la revendication 1, le nombre des vérins hydrauliques étant de quatre, parmi lesquels : un vérin hydraulique avant gauche (6), un vérin hydraulique avant droit (7), et un vérin hydraulique arrière gauche (8), et un vérin hydraulique arrière droit (9).

5. Procédé de simulation pour un simulateur multifonction d'interaction homme-ordinateur en VR et d'environnement externe selon l'une quelconque des revendications 1 à 4, **caractérisé en ce qu'**il comporte les étapes suivantes :
Étape 1 : le tableau de manœuvre recueille en temps réel des informations de posture de jambe et des informations de posture de main d'un participant par l'intermédiaire du capteur de jambe et du capteur de main ;
Étape 2 : le tableau de manœuvre acquiert une instruction de manipulation virtuelle d'après les informations de posture de jambe et les informations de posture de main, ou le tableau de manœuvre reçoit directement l'instruction de manipulation virtuelle par une instruction du participant ; et
Étape 3 : le moyen de commande réalise la commande de l'environnement virtuel selon l'instruction de manipulation virtuelle obtenue à l'étape 2 en commandant un environnement réel constitué par un moteur inférieur (14) de rotation, les pompes hydrauliques, le moteur d'entraînement de bague extérieure, et/ou le moteur d'entraînement de bague intérieure pour commander une attitude du siège (5) afin d'obtenir la commande de la propre posture du participant.
